# FASCICULE DE BREVET EUROPEEN

(11) **EP 1 530 063 B1**
(45) Date de publication et mention de la délivrance du brevet: **24.01.2007**
(21) Numéro de dépôt: 04026312.1
(22) Date de dépôt: 05.11.2004
(51) Int. Cl.: G01S 15/04, G01S 7/539

(54) **Système de sécurite à détection d'obstacles**
Sicherheitssystem mit Hindernisdetektion
Obstacle detection security system

(30) Priorité: 10.11.2003 FR 0313183
(43) Date de publication de la demande: 11.05.2005
(73) Titulaire: Lefebvre, Jean-Noel, 69008 Lyon (FR)
(72) Inventeur: Saleyron, Rodolphe, 69100 Villeurbanne (FR)
(74) Mandataire: Jeannet, Olivier

(56) Documents cités:
- WO-A-93/05487
- BIEHL K-E ET AL: "ULTRASCHALL-SYSTEME FUR DIE INDUSTRIELLE OBJEKTERFASSUNG UND KLASSIFIZIERUNG" TECHNISCHES MESSEN TM, R.OLDENBOURG VERLAG. MUNCHEN, DE, vol. 55, no. 10, 1988, pages 367-376, XP000066412 ISSN: 0171-8096

## Description

### Domaine technique de l'invention.

L'invention est du domaine des systèmes de sécurité utilisant la réflexion de signaux, ultrasonores notamment, pour détecter un obstacle et le cas échéant générer une information d'alerte. Elle a pour objet un tel système appliqué au contrôle du respect d'une procédure de franchissement d'un lieu de passage à accès sélectif, tel que le contrôle de l'unicité d'une personne autorisée à franchir ce lieu de passage.

### Etat de la technique.

Il est courant de surveiller un lieu de passage à accès sélectif dans un aéroport, un bâtiment militaire ou une banque par exemple. Cette surveillance est notamment réalisée à partir d'une identification de personnes autorisées à accéder à une zone sécurisée, au moyen d'un dispositif de contrôle d'accès. Pour optimiser cette surveillance, l'identification de la personne est complétée par une obligation à respecter une procédure déterminée de franchissement du lieu de passage, et notamment par une vérification de l'unicité de cette personne identifiée.

A cette fin, il est connu d'utiliser des systèmes de surveillance pour le contrôle de cette unicité mettant en oeuvre des moyens de capture d'une image vidéo par des caméras installées sur le lieu de passage. Il est apparu un inconvénient dissuasif, voire rédhibitoire à l'utilisation de ces systèmes de surveillance, en raison de leur installation et de leur condition de fonctionnement coûteuses, leur complexité de mise en oeuvre étant inadaptée aux besoins spécifiques d'un contrôle du respect d'une procédure de franchissement d'un lieu de passage à accès sélectif.

C'est pourquoi, il a été proposé d'utiliser des systèmes de surveillance plus simples pour générer des informations suffisantes au contrôle de l'unicité de personne, mettant en oeuvre des moyens de détection d'un obstacle à partir de signaux optiques. Il est cependant apparu que de tels systèmes ne procuraient pas des informations suffisamment complexes à partir desquelles il serait possible d'en déduire un respect d'une procédure simple et efficace de franchissement d'un lieu de passage, et notamment l'unicité d'une personne autorisée à ce franchissement.

Il a donc été proposé d'utiliser des systèmes de surveillance qui offrent un compromis entre leur complexité et la diversité des informations recueillies. Il a par exemple été proposé de contrôler cette unicité à partir d'un traitement d'informations générées par des cellules émettrices-réceptrices de signaux, ondes ultrasonores notamment. De tels systèmes permettent d'associer à une information relative à un obstacle rencontré, une information relative au temps écoulé entre l'émission et la réception des signaux respectivement produits par les cellules.

Par exemple, le document W0930587 (SCHWARZ) décrit un tel système qui comporte une pluralité de cellules émettrices-réceptrices d'ondes ultrasonores. Pour contrôler l'unicité de la personne autorisée, ces cellules sont placées dans le plafond d'un lieu de passage organisé en porte à tourniquet compartimentée et motorisée, en étant disposées concentriquement à l'axe de rotation de cette porte. Lorsqu'une personne autorisée souhaite franchir le lieu de passage, un dispositif de contrôle de l'autorisation d'accès, qui a préalablement validé cette autorisation, commande la mise en oeuvre du moteur de la porte, pour mettre en communication le compartiment recevant la personne autorisée avec la zone sécurisée.

Concomitamment, le dispositif de contrôle commande la mise en oeuvre des cellules, pour vérifier au cours de la rotation de la porte que ledit compartiment ne contient que la personne autorisée seule.

On notera que l'émission ultrasonore pour un cycle de fonctionnement du système est de préférence effectuée à partir d'une succession de séquences d'émissions, chaque séquence mettant en oeuvre successivement des émissions élémentaires de l'une à l'autre des cellules, notamment pour éviter un bruit susceptible d'affecter la pertinence des informations recueillies. Ces informations recueillies, qui associent la présence d'un obstacle à une durée de réception d'un signal préalablement émis, sont analysées à partir de ce double paramétrage pour chacune des cellules et pour chaque séquence d'émission, pour finalement en déduire la présence d'un obstacle et la distance de séparation entre cet obstacle et les cellules.

Plus précisément, les informations recueillies sont analysées pour en déduire des informations élémentaires représentatives de la réception ou de la non-réception d'une onde ultrasonore pour chacune des cellules et pour chaque séquence d'émissions, affectée à une durée écoulée depuis la mise en oeuvre des cellules. Puis, ces informations élémentaires sont synthétisées pour en déduire des informations de résultat qui sont jugées représentatives pour chacune des cellules au cours d'un cycle d'émission d'une pluralité de séquences d'émissions de signaux. Ce jugement est fondé sur une comparaison entre elles des informations élémentaires affectées à chacune des cellules pour chacune des séquences d'émissions, pour ne conserver comme information pertinente une même information élémentaire répétée pour chacune des séquences d'un cycle, sinon dans le cas contraire rejeter une information élémentaire isolée relative à une détection d'obstacle et jugée à négliger.

Puis enfin, les informations alternatives de résultat sont analysées pour en déduire, pour chacune des cellules et chacun des cycles de séquence d'émission, la présence d'un obstacle et la distance séparant cet obstacle des cellules, pour le cas échéant d'une détection d'un double obstacle, générer un signal d'alerte relative à un défaut d'unicité de la personne autorisée qui franchit le lieu de passage à accès sélectif.

Il apparaît cependant que ces dispositifs, qui utilisent des moyens de détection qui fournissent une information seulement fondée sur la présence d'un obstacle et une distance relative à cet obstacle, procurent des résultats encore insuffisants au regard des attentes dans le domaine, voire sont d'une fiabilité qui est affectée en raison des restrictions qui en découlent des motifs à la genèse d'un signal d'alerte.

Dans un autre domaine, il a été proposé par une publication de BIEHL K-E et Al « Ultraschall-systeme fur die industrielle objekterfassung und klassifizierung », parue dans la revue TECHNISCHENES MESSEN TM, vol.55, N°10,1988 pages 367-376, d'utiliser un dispositif à ultrasons pour l'identification de pièces mécaniques à un poste d'approvisionnement, d'un robot par exemple. Il est plus particulièrement proposé de déterminer la position, la classification et l'identification d'objets pour la manipulation de ces objets par un système robotique. Les capteurs à ultrasons sont alignés pour décrire le profil de hauteur des objets saisis. Au delà de la détermination de la géométrie de l'objet, ce dernier est en outre classifié, par comparaison avec un groupe d'échantillons connus préalablement mémorisés. Il en ressort que l'on connaît l'avantage de déterminer l'image d'un objet par des capteurs à ultrasons, et de comparer cette image à une pluralité d'images prémorisées pour classifier l'objet.

Cependant une simple transposition de la connaissance de cette méthode de reconnaissance et de classification d'objets pour un poste d'approvisionnement d'un système robotique, à un système de surveillance utilisant la réflexion de signaux ultrasonores pour détecter une situation d'alerte, n'offrirait pas toute les garanties de fiabilité requises dans ce domaine. En effet, il est visé dans le domaine de sécurité d'un lieu de passage de contrôler le respect d'une procédure déterminée de franchissement de ce lieu de passage. Il en ressort que les difficultés à surmonter vont au-delà de la simple reconnaissance d'une forme d'un objet à classifier, notamment en fiabilisant une éventuelle information d'alerte par la mise en oeuvre d'une procédure de reconnaissance appropriée.

### Objet de l'invention.

Le but général de la présente invention est de proposer un système de sécurité pour le contrôle du respect d'une procédure déterminée de franchissement d'un lieu de passage à accès sélectif par une personne autorisée, et notamment du contrôle de l'unicité de cette personne, pour le cas échéant générer un signal d'alerte.

Il est plus particulièrement visé par la présente invention de répondre aux inconvénients mentionnés plus haut en proposant un tel système qui mette en oeuvre des moyens simples de détection d'obstacles mais qui néanmoins procure une faculté à générer un signal d'alerte à partir de situations potentiellement diverses.

Le système de sécurité proposé par la présente invention est un système de sécurité pour le contrôle du respect d'une procédure déterminée de franchissement d'un lieu de passage à accès sélectif par une personne autorisée, tel que l'unicité de cette personne. Ce système de sécurité est du genre mettant en oeuvre des moyens d'émission et de réception de signaux, ultrasonores ou analogues notamment, qui procurent des informations relatives à la présence d'un obstacle et à la durée séparant l'émission d'un signal de la réception de ce signal renvoyé par l'obstacle. Des moyens de calcul permettent d'analyser les signaux reçus, pour le cas échéant générer un signal d'alerte.

Selon une approche globale de la présente invention, celle-ci a consisté à exploiter les signaux reçus par les moyens d'émission-réception de ces signaux, à partir desquels sont extraites à la manière connue des informations associant la présence ou non d'un obstacle et la durée séparant l'émission du signal correspondant de sa réception. Cette exploitation selon l'invention vise à définir un profil détecté d'une situation qui est comparé à des profils-type préalablement mémorisés et correspondant à des situations identifiées. Ces dernières sont notamment des situations susceptibles de générer un signal d'alerte, ou des situations autorisées. On notera que pour éviter une comparaison des profils détectés avec une pluralité trop importante de profils-type, il est avantageusement proposé d'incrémenter les informations définissant les profils détectés pour pondérer la pertinence des informations extraites des signaux successivement reçues. Cette pondération permet notamment d'approcher au mieux une éventuelle similitude entre le profil détecté et les profils-type.

A partir de cette définition de profils détectés et validés après comparaison, il est ensuite proposé d'analyser ces profils au regard de ceux préalablement détectés et validés, pour évaluer la pertinence de la succession de ces profils au regard d'une telle succession considérée comme admise, pour le cas échéant encore générer un signal d'alerte, nonobstant l'éventuelle validation individuelle des profils détectés au regard de leur comparaison avec les profils-type.

En outre et accessoirement, il est proposé d'accroître la pertinence de la détection des profils, en extrapolant la définition d'un profil susceptible d'être pertinent à partir de signaux détectés qui, considérés isolément, ne constituent pas une information jugée suffisamment pertinente pour définir un profil détecté. Cette extrapolation s'effectue en créant des informations d'extrapolation dans des zones contiguës entre deux signaux voisins pour former conjointement un profil susceptible d'être assimilé à un profil détecté.

Le système de sécurité de la présente invention comprend notamment :
* ) au moins un groupe d'une pluralité de cellules disposées sur le lieu de passage et émettrices-réceptrices de signaux par séquence d'émissions pour un cycle donné, dont la mise en oeuvre est placée sous la dépendance de moyens de commande de ces émissions et réceptions de signaux successivement de l'une à l'autre des cellules du groupe pour chacune des séquences,
* ) des moyens chronométriques de mesure de la durée entre l'émission d'un signal par une cellule et la réception par cette cellule d'un signal préalablement émis,
* ) des premiers moyens de mémoire des signaux individuellement reçus par les cellules et répartis, pour chacune des cellules et pour chaque séquence d'émissions, en informations élémentaires relatives aux détections avérées et alternativement inexistantes d'un obstacle, à chacune desquelles détections est affectée une durée mesurée suivant une échelle de temps prédéterminée,
* ) des premiers moyens de calcul pour synthétiser, pour chaque cycle, en informations de résultat les informations élémentaires affectées à chacune des cellules par séquence d'émission,
* ) des deuxièmes moyens de calcul pour déterminer à partir des informations de résultat une information d'alerte relative au non respect d'une procédure de franchissement du lieu de passage préalablement identifiée.

Selon la présente invention, un tel système de sécurité est principalement reconnaissable en ce que les deuxièmes moyens de calcul sont associés à des deuxièmes moyens de mémoire d'une pluralité d'informations de résultat-type préalablement mémorisées et identifiées comme correspondantes à une situation connue à laquelle est le cas échéant affectée une information d'alerte. Cette association de moyens constitue des premiers moyens de comparaison de similitude au moins approchée entre les informations de résultat calculées pour chaque cycle et les informations de résultat-type, pour le cas échéant générer un signal d'alerte.

Par ailleurs, les deuxièmes moyens de calcul comprennent des moyens de calcul itératif pour définir une pluralité d'informations de résultat potentiellement admises à partir d'informations de résultat préalablement calculées et premièrement comparées pour un cycle donné. Ces moyens de calcul itératif sont associés à des deuxièmes moyens de comparaison de similitude au moins approchée entre ces informations de résultat en pluralité potentiellement admises et des informations de résultats postérieurement calculées et premièrement comparées pour un cycle suivant donné.

On notera que de préférence, ces dernières informations de résultat sont tant celles identifiées que celles non-identifiées au regard des informations de résultat-type pour le cas échéant optimiser la pertinence des résultats obtenus par les moyens de calcul itératif. Le cas échéant et notamment en cas de non pertinence des informations de résultats calculées et premièrement comparées, au regard d'informations de résultats extemporanément calculées et potentiellement admises à partir d'au moins une information de résultat précédente, un signal d'alerte est généré.

Les premiers moyens de calcul sont avantageusement des moyens pour synthétiser en information de résultat les informations élémentaires à partir, pour une même cellule et une même durée pour une séquence d'émissions d'un cycle, d'une incrémentation de l'information de résultat en fonction de la récurrence de la détection d'obstacle de l'une à l'autre des informations élémentaires correspondantes. Ces dispositions sont telles que les informations de résultat sont pondérées sur une échelle de valeur relative au nombre de séquences d'émissions du cycle, en fonction de la récurrence de la détection ou non d'un même obstacle par chacune des cellules pour un cycle donné. On comprendra par incrémentation de l'information de résultat un ajout à cette dernière d'un pas positif ou négatif en fonction d'une information de résultat révélant la réception respectivement la non-réception d'un signal. On comprendra aussi que la valeur affectée à chaque pas d'incrémentation est suceptible d'être elle-même pondérée d'un coefficient prédéfinie.

Pour accroître la pertinence des profils détectés, et dans le cas où une information de résultat est isolée, les deuxièmes moyens de calcul comprennent en outre des moyens de détection d'une information de résultat isolée et des moyens d'extrapolation générateurs d'au moins une information élémentaire d'extrapolation susceptible de mettre en relation deux informations de résultat isolées pour générer dans ce cas une information de résultat potentielle. Ces moyens d'extrapolation sont en relation avec les premiers moyens de comparaison pour valider ou non l'information élémentaire d'extrapolation en information de résultat calculée, à partir d'une comparaison de l'information de résultat potentielle avec les résultats-type répertoriés.

Pour accroître la pertinence des informations prises en compte quant à la détection d'obstacles significatifs, les signaux préférentiellement pris en compte sont ceux rapidement reçus. Plus particulièrement, les moyens chronométriques sont associés à des moyens de sélection des informations élémentaires prises en compte par les premiers moyens de calcul, selon une échelle de temps à variation de pas non régulière favorisant la prise en considération des informations élémentaires les plus proches de l'instant d'émission du signal par la cellule correspondante.

Par ailleurs, et en raison de la déperdition progressive de puissance des signaux émis, les moyens chronométriques sont en outre de préférence associés à des moyens de traitement des signaux reçus par les cellules, pour amplifier ces signaux proportionnellement à la durée séparant l'émission de la réception par la cellule d'un signal correspondant. On notera que d'autres traitement analogues des signaux reçus sont susceptibles d'être appliqués à la manière connue dans le domaine sans déroger aux règles générales de l'invention qui ont été énoncées.

Accessoirement, le système de sécurité de la présente invention associe aux premiers moyens de calcul un tapis de sol équipé de capteurs de détections de type sensitifs ou inductifs par exemple. Ces capteurs de détections sont de préférence des détecteurs de type capacitif par détection de la variation de charges électrostatiques. Les capteurs de détection sont notamment disposés en bandes transversales en étant disposés à distance sur le lieu de passage, pour générer une information de contrôle dans le cas d'un passage d'une personne au moins sur le tapis de sol. Les deuxième moyens de calcul comprennent en outre des moyens de traitement de cette information de contrôle, pour le cas échéant générer une information d'alerte à partir d'une analyse de cohérence entre une information de résultat détectée et comparée et l'information de contrôle.

Le tapis de sol est par exemple constitué d'un ensemble stratifié, comprenant une plaque rigide de surface, en polymétacrylate ou analogue par exemple, d'une épaisseur de l'ordre maximale de 1 mm. Une nappe conductrice est placée sous la plaque rigide, en étant composée de bandes conductrices qui sont disposées transversalement sous la plaque, en étant distantes suivant le sens de passage du lieu à sécuriser. Une nappe isolante recouvre à leur face inférieure les nappes conductrices pour les protéger. Une bande adhésive ou analogue est placée sous le tapis de sol pour sa fixation au sol.

Les nappes conductrices sont d'une largeur de l'ordre de 20 mm et sont préférentiellement distantes les unes des autres d'un écart compris entre 80 mm et 150 mm. Chaque bande conductrice est composée de trois pistes conductrices parallèles espacées entre elles d'une distance comprise entre 1 mm et 2 mm, la largeur de la piste médiane étant de l'ordre de 10 mm.

### Description des figures.

La présente invention sera mieux comprise, et des détails en relevant apparaîtront, à la description qui va en être faite d'une forme préférée de réalisation, en relation avec les figures des planches annexées dans lesquelles :
La fig.1 est une vue schématique d'un portique équipé d'un système de sécurité selon la présente invention.
La fig.2 est une vue schématique d'une table de résultat synthétisant des informations consignées dans plusieurs tables élémentaires obtenues à partir du système de sécurité représenté sur la fig.1.
La fig.3 est une vue schématique des étapes de fonctionnement d'un système de sécurité représenté sur la figure précédente.

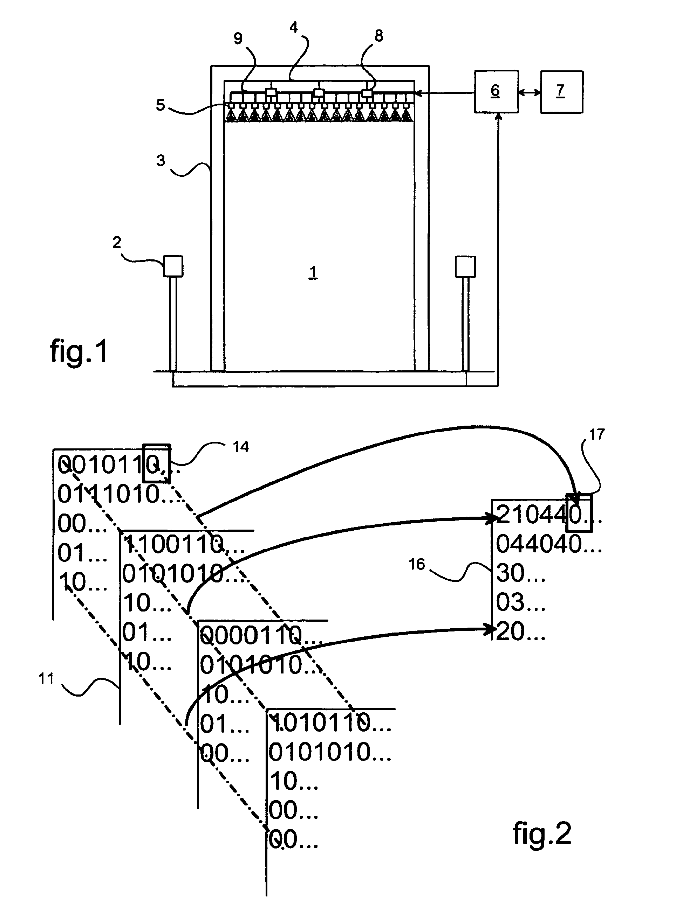

Sur la fig.1, un lieu de passage 1 entre deux zones distinctes, dont une zone sécurisée telle que celle d'une banque par exemple, est organisé en portique 3, porte ou analogue. Au voisinage de celui-ci 1, un dispositif 2 destiné à contrôler le lieu de passage 1 entre les zones distinctes est installé pour ne permettre l'accès à la zone sécurisée qu'à des personnes préalablement autorisées seules. Ces personnes doivent respecter obligatoirement une procédure déterminée de franchissement du lieu de passage 1 pour garantir un contrôle efficace de l'accès à la zone sécurisée.

Notamment, l'une des règles réside dans une unicité obligatoire de la personne autorisée qui franchit le lieu de passage 1. Pour vérifier le respect de ces règles, et notamment celle relative à l'unicité, le portique 3 est équipé d'un système de sécurité de la présente invention illustrée en exemple.

Ce système de sécurité comprend quatre modules identiques, tels que 4, comportant chacun quatre cellules émettrices-réceptrices de signaux, telles que 5. Les modules 4 sont aboutés et disposés sur la traverse du portique 3 en surplomb du lieu de passage 1, de sorte que les cellules 5 sont alignées et orientées vers le sol. Chacune de ces cellules 5 est destinée d'une part à émettre un signal et d'autre part à recevoir un signal renvoyé par un obstacle présent sur le lieu de passage 1.

On notera que les cellules 5 sont par exemple des cellules émettrices-réceptrices de signaux ultrasonores, et notamment des cellules qui présentent des caractéristiques de production d'un signal ultrasonore d'une fréquence comprise entre 40Khz et 500Khz sur un cône de projection compris entre 5° et 70°.

La mise en oeuvre des cellules 5 est placée sous la dépendance de moyens de commande 6 associés à des moyens chronométriques 7, pour provoquer l'émission du signal successivement l'une après l'autre au cours d'une séquence d'émissions par les cellules 5, et pour mesurer la durée entre l'émission de ce signal et la réception d'un écho par les mêmes cellules 5. Les modules 4 étant avantageusement équipés de moyens de liaison mécanique 8 et connectique 9 avec un module voisin 4, pour permettre une mise en oeuvre successive des cellules 5 de l'un à l'autre des modules 4, de sorte qu'une séquence d'émissions est constituée d'une pluralité d'émissions successives depuis la première cellule du premier module jusqu'à la dernière cellule du dernier module. Lorsque la dernière cellule du dernier module a été mise en oeuvre, les moyens de commande réinitialise les cellules 5 pour permettre la mise en oeuvre d'une séquence d'émissions à partir de la première cellule du premier module.

On comprendra à ce stade de la description qu'un cycle de fonctionnement du système de sécurité comporte une pluralité de séquences d'émissions et qu'au cours d'une période de fonctionnement du système de sécurité, plusieurs cycles de fonctionnement sont mis en oeuvre. On notera que le système de sécurité est avantageusement mis en oeuvre à partir du dispositif de contrôle d'accès 2 au cours d'une période de fonctionnement. On relèvera que cette application du système de l'invention est citée pour exemple, et que le système proposé par la présente invention est notamment apte à fonctionner indépendamment, tant des aménagements annexes de l'espace dans lequel il est installé, que de procédures de sécurité complémentaires. Par exemple, le système est susceptible de fonctionner en continu, ou encore à partir de moyens quelconques de commande provoquant sa mise en oeuvre, tel qu'un capteur de présence ou d'approche d'une personne dans le champ d'émission des cellules. Par exemple encore, le lieu de passage est susceptible d'être agencé en un sas de sécurité à double porte d'accès, dont notamment le voisinage du seuil de l'une au moins des portes est équipée de moyens de commande de la mise en oeuvre des cellules 5, ou encore dont l'une au moins des portes est équipée d'un capteur de détection de son ouverture pour l'émission de signaux, et de moyens de détection de sa fermeture pour l'arrêt d'émission des signaux.

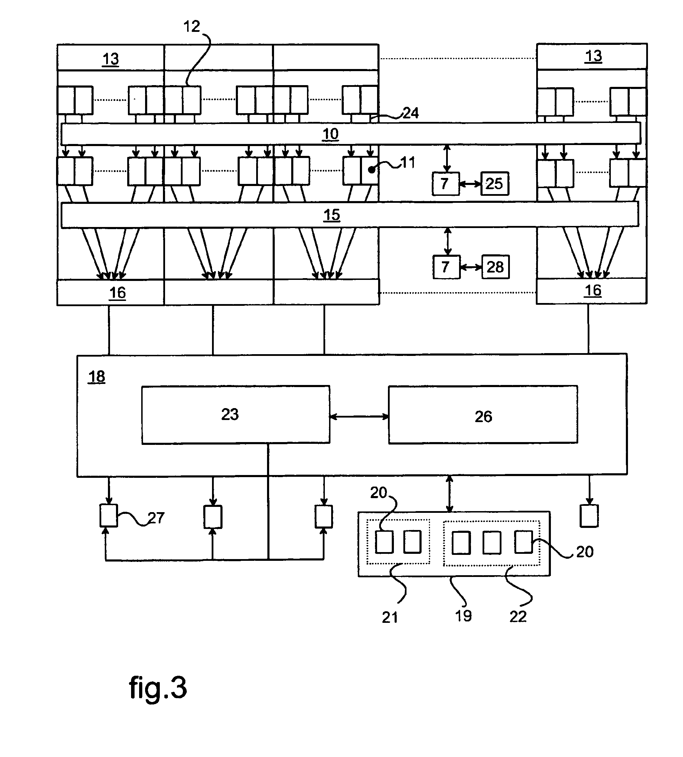

La fig.3 illustre le fonctionnement du système de sécurité au cours d'une période de fonctionnement, les signaux reçus par les cellules 5 sont traités, par amplification par exemple, de manière à accroître leur pertinence au regard d'une information relative à un obstacle détecté. Les signaux analogiques traités 24 sont transformés par des moyens de conversion 10 en des informations binaires élémentaires. Les moyens chronométriques 7 sont associés à des moyens de sélection 25 des informations binaires élémentaires prises en compte selon une échelle de pas non régulière, qui favorise la prise en considération des informations élémentaires les plus proches de l'instant d'émission du signal par la cellule correspondante, jugée plus pertinentes.

En se reportant aussi à la fig.2, les informations binaires élémentaires sont consignées dans des premiers moyens de mémoire schématisés en une pluralité de tables élémentaires respectives, telles que 11, à chaque séquence d'émissions de signaux, telle que 12, pour un cycle de fonctionnement donné 13. Chaque table élémentaire 11 est notamment du type matrice (m colonnes, n lignes) dont les colonnes identifient successivement les cellules 5 mises en oeuvre et les lignes représentent la durée de temps entre l'émission du signal par la cellule mise en oeuvre correspondante et la réception d'un signal reçu. L'intersection d'une colonne et d'une ligne constitue une case élémentaire 14 à laquelle est affectée l'information binaire élémentaire, du type « 1 » ou « 0 », signifiant respectivement la réception ou la non-réception d'un signal pour la cellule 5 et la durée de temps correspondants, au cours de la séquence d'émissions 12.

Les informations binaires élémentaires des tables élémentaires 11 sont synthétisées par des premiers moyens de calcul 15 en des informations de résultat qui sont consignées dans des tables de résultat 16 de même type que les tables binaires élémentaires 11 respectivement correspondantes à chacun des cycles de fonctionnement 13 pour une période de fonctionnement donnée. L'intersection d'une colonne et d'une ligne d'une table de résultat 16 constitue une case de résultat 17 à laquelle est affectée l'information de résultat représentative de la réception ou de la non-réception d'un signal pour la cellule 5 et la durée de temps correspondants, au cours du cycle de fonctionnement 13.

La synthèse des informations binaires élémentaires de résultat d'une case spécifique 14 des tables binaires élémentaires 11 en une information de résultat consignée dans la case de résultat correspondante 17, est réalisée à partir d'un processus d'incrémentation des informations binaires élémentaires. Ce processus est par exemple réalisé par cumul des informations binaires élémentaires affectées aux cases élémentaires 14 pour une cellule et une durée données, pour conférer à la case de résultat 17 correspondante une pondération significative selon la valeur de ce cumul.

La fig.2 illustre schématiquement un tel processus d'incrémentation, dans lequel un cycle de fonctionnement comporte quatre séquences d'émissions 12. On comprendra que l'illustration faite sur la fig.2 des fonctionnalités des premiers moyens de calcul 15 est schématique. On relèvera que le mode de calcul permettant d'aboutir aux informations de résultat à partir des informations binaires élémentaires est indifféremment un mode d'incrémentation additionnelle d'une pluralité de tables binaires élémentaires établies, ou un mode d'incrémentation itératif pour déduire les informations de résultat à partir de leur évolution discrète correspondante à la succession d'informations binaires élémentaires, ou mode de calcul analogue. A titre significatif, les informations de résultat d'un cycle varient selon une échelle de valeur comprise entre une valeur maximale proportionnelle au nombre de séquences d'émissions 12 du cycle 13, et une valeur minimale nulle.

Des deuxièmes moyens de calcul 18 sont mis en oeuvre pour déterminer à partir des tables de résultat 16 une situation d'alerte relative au non-respect de la procédure de franchissement du lieu de passage 1. Cette situation d'alerte correspond notamment à une identification d'un cumul d'obstacles sur une même table de résultat 16 significatif du non-respect de la procédure. A cette fin, les deuxièmes moyens de calcul 18 sont associés à des deuxièmes moyens de mémoire 19 de tables de résultat-type pré-définies, telles que 20, qui sont représentatives de diverses situations connues au regard du respect ou non de la procédure, pour constituer des premiers moyens de comparaison 18,19 entre une table de résultat calculée 16 et les tables de résultat-type pré-mémorisées 20, au regard d'une similitude de l'une à l'autre de ces tables. On comprendra qu'il peut être considéré que ces tables de résultat-type 20 sont regroupées en deux ensembles 21,22, dont l'un 21 correspond à des situations connues d'alerte et dont l'autre 22 correspond à des situations connues de respect de la procédure.

On comprendra que cette première comparaison permet de valider les tables de résultat calculées 16 comme étant reconnues au regard des tables de résultat-type 20.
Dans le cas contraire, et selon diverses variantes de mise en oeuvre du système de l'invention, soit les tables de résultat 16 non reconnues sont négligées, soit, et de préférence, ces tables de résultat 16 sont conservées pour une analyse ultérieure de l'ensemble des tables de résultat calculées 16.

Cette analyse ultérieure est effectuée par des moyens de calcul itératif 23 qui participent des deuxièmes moyens de calcul 18, pour définir une pluralité de tables de résultat potentiellement admises 27 à partir d'une table de résultat considérée 16 qui a été analysée par les premiers moyens de calcul 15, et cela pour chacune des tables de résultats 16. Ces moyens de calcul itératif 23 sont associés à des deuxièmes moyens de comparaison 26 entre les tables de résultat potentiellement admises 27 et une table de résultat établie postérieurement à ladite table de résultat considérée.

Ces dispositions sont telles que chaque table de résultat nouvellement calculée est analysée au regard de tables de résultat potentiellement admises 27, définies au regard de l'évolution des tables de résultat précédemment calculées 16.

On relèvera finalement qu'un signal d'alerte est générée au regard du respect ou non de la procédure de franchissement du lieu de passage grâce au processus d'analyse des tables de résultats calculées 16, d'une part au regard des tables-type pré-mémorisées 20, puis au regard de la pertinence de succession des tables de résultat calculées 16.

## Revendications

1. Système de sécurité pour le contrôle du respect d'une procédure déterminée de franchissement d'un lieu de passage (1) à accès sélectif par une personne autorisée, tel que l'unicité de cette personne, pour le cas échéant générer une information d'alerte, ce système de sécurité comprenant :
- au moins un groupe (4) d'une pluralité de cellules (5) disposées sur le lieu de passage (1) et émettrices-réceptrices de signaux par séquence d'émissions (12) pour un cycle donné (13), dont la mise en oeuvre est placée sous la dépendance de moyens de commande (6) de ces émissions et réceptions de signaux successivement de l'une à l'autre des cellules (5) du groupe (4) pour chacune des séquences (12),
- des moyens chronométriques (7) de mesure de la durée entre l'émission d'un signal par une cellule (5) et la réception par cette cellule (5) d'un signal préalablement émis,
- des premiers moyens de mémoire (11) de signaux individuellement reçus (24) par les cellules (5) et répartis, pour chacune des cellules (5) et pour chaque séquence d'émission (12), en informations élémentaires relatives aux détections avérées et alternativement inexistantes d'un obstacle, à chacune desquelles détections est affectée une durée mesurée suivant une échelle de temps prédéterminée,
- des premiers moyens de calcul (15) pour synthétiser, pour chaque cycle (13), en informations de résultat les informations élémentaires affectées à chacune des cellules (5) par séquence d'émission (12),
- des deuxièmes moyens de calcul (18) pour déterminer à partir des informations de résultat une information d'alerte relative au non respect d'une procédure de franchissement du lieu de passage (1) préalablement identifiée,
**caractérisé en ce que** les deuxièmes moyens de calcul (18) sont associés à des deuxièmes moyens de mémoire (19) d'une pluralité d'informations de résultat-type (20) préalablement mémorisées et identifiées comme correspondantes à une situation connue à laquelle est le cas échéant affectée une information d'alerte, pour constituer des premiers moyens de comparaison (18,19) de similitude au moins approchée entre les informations de résultat calculées pour chaque cycle et les informations de résultat-type (20), et le cas échéant de génération d'un signal d'alerte, et **en ce que** les deuxièmes moyens de calcul (18) comprennent des moyens de calcul itératif (23) pour définir une pluralité d'informations de résultat potentiellement admises (27) à partir d'informations de résultat préalablement calculées (16) et premièrement comparées pour un cycle donné (13), ces moyens de calcul itératif (23) étant associés à des deuxièmes moyens de comparaison (26) de similitude au moins approchée entre ces informations de résultat en pluralité potentiellement admises (27) et des informations de résultats (16) postérieurement calculées et premièrement comparées pour un cycle suivant donné (13), pour générer le cas échéant un signal d'alerte.

2. Système de sécurité selon l'une quelconque des revendications précédentes, **caractérisé en ce que** les premiers moyens de calcul (15) sont des moyens pour synthétiser en information de résultat les informations élémentaires à partir, pour une même cellule (5) et une même durée pour une séquence d'émissions (12) d'un cycle (13), d'une incrémentation de l'information de résultat en fonction de la récurrence de la détection d'obstacle de l'une à l'autre des informations élémentaires correspondantes, de sorte que les informations de résultat soient pondérées sur une échelle de valeur relative au nombre de séquences d'émissions (12) du cycle (13), en fonction de la récurrence de la détection ou non d'un même obstacle par chacune des cellules (5).

3. Système de sécurité selon l'une quelconque des revendications précédentes, **caractérisé en ce que** les deuxièmes moyens de calcul comprennent en outre des moyens de détection d'une information de résultat isolée et des moyens d'extrapolation générateurs d'au moins une information élémentaire d'extrapolation susceptible de mettre en relation deux informations de résultat isolées, pour générer dans ce cas une information de résultat potentielle, ces moyens d'extrapolation étant en relation avec les premiers moyens de comparaison pour valider ou non l'information élémentaire d'extrapolation en information de résultat calculée, à partir d'une comparaison de l'information de résultat potentielle avec les résultats-type répertoriés.

4. Système de sécurité selon l'une quelconque des revendications précédentes, **caractérisé en ce que** les moyens chronométriques (7) sont associés à des moyens de sélection (28) des informations élémentaires prises en compte par les premiers moyens de calcul (15), selon une échelle de temps à variation de pas non régulière favorisant la prise en considération des informations élémentaires les plus proches de l'instant d'émission du signal par la cellule correspondante.

5. Système de sécurité selon l'une quelconque des revendications précédentes, **caractérisé en ce que** les moyens chronométriques (7) sont en outre associés à des moyens de traitement (25) des signaux reçus par les cellules (24), pour amplifier ces signaux (24) proportionnellement à la durée séparant l'émission de la réception par la cellule d'un signal correspondant.

6. Système de sécurité selon l'une quelconque des revendications précédentes, **caractérisé en ce que** les cellules (5) sont disposées en alignement sur une traverse formant support pour une application du système au franchissement d'un seuil de porte (3).

7. Système de sécurité selon l'une quelconque des revendications précédentes, **caractérisé en ce qu**'il associe aux premiers moyens de calcul un tapis de sol équipé de capteurs de détections, pour générer une information de contrôle dans le cas d'un passage d'une personne au moins sur le tapis de sol.

8. Système de sécurité selon la revendication 7, **caractérisé en ce que** les deuxième moyens de calcul comprennent en outre des moyens de traitement de l'information de contrôle, pour le cas échéant générer une information d'alerte à partir d'une analyse de cohérence entre une information de résultat détectée et comparée et l'information de contrôle.

9. Système de sécurité selon l'une quelconque des revendications 7 et 8 **caractérisée en ce que** le tapis de sol est constitué d'un ensemble stratifié, comprenant une plaque rigide de surface, une nappe conductrice composée de bandes conductrices disposées transversalement sous la plaque, en étant distantes suivant le sens de passage du lieu à sécuriser, une nappe isolante qui recouvre à leur face inférieure les nappes conductrices pour les protéger, et une bande adhésive la fixation du tapis au sol.

10. Système de sécurité selon la revendication 9 **caractérisée en ce que** les bandes conductrices sont d'une largeur de l'ordre de 20 mm et sont composée de trois pistes conductrices parallèles espacées entre elles d'une distance comprise entre 1 mm et 2 mm, la largeur de la piste médiane étant de l'ordre de 10 mm.

## Claims

1. Security system for checking that a determined procedure for crossing a selective access place of passage (1) is respected by an authorised person, such as for checking the unique identity of this person, and if applicable to generate an alert signal, this security system comprising:
- at least one group (4) of a plurality of cells (5) disposed on the place of passage (1) which emit and receive signals by sequence of emissions (12) for a given cycle (13), whose implementation is dependent on the control means (6) of these emissions and receptions of signals successively from one to the other of the cells (5) of the group (4) for each of the sequences (12),
- chronometric means (7) for measuring the duration between the emission of a signal by a cell (5) and the reception by this cell (5) of a signal emitted previously,
- first memory means (11) of signals received individually (24) by the cells (5) and distributed, for each of the cells (5) and for each emission sequence (12), into elementary information relative to the detections made and alternatively inexistent of an obstacle, and to each of the detections a measured duration is attributed according to a predetermined time scale,
- first calculation means (15) to synthesise, for each cycle (13) in result information the elementary information attributed to each of the cells (5) by emission sequence (12),
- second calculation means (18) to determine from the result information alert information concerning the non respect of a procedure for crossing a place of passage (1) previously identified,
**characterised in that** the second calculation means (18) are associated to second memory means (19) of a plurality of typical result information elements (20) previously memorised and identified as corresponding to a given situation to which, if applicable, an element of alert information is attributed, to compose first comparison means (18, 19) for at least a close similitude between the result information calculated for each cycle and the typical result information (20), and, if applicable, the generation of an alert signal, and **in that** the second calculation means (18) comprise iterative calculation means (23) to define a plurality of potentially accepted result information elements (27) from previously calculated result information (16) and compared firstly for a given cycle (13), wherein these iterative calculation means (23) are associated to second comparison means (26) of at least close similitude between the result information (16) calculated later and firstly compared for a given following cycle (13) to generate if applicable an alert signal.

2. Security system of any of the previous claims, **characterised in that** the first calculation means (15) are means for synthesising into result information the elementary information from, for a same cell (5) and a same duration for an emission sequence (12) of a cycle (13), an incrementation of the result information according to the recurrence of the detection of an obstacle from one to the other of the corresponding elementary information elements, such that the result information is weighted on a value scale relative to the number of emission sequences (12) of the cycle (13) according to the recurrence of the detection or not of a same obstacle for each of the cells (5).

3. Security system of any of the previous claims, **characterised in that** the second calculation means further comprise detection means for an isolated result information element and extrapolation means generating at least one extrapolation elementary information element likely to bring into contact two isolated result information elements, to generate in this case a potential result information element, wherein these extrapolation means are in contact with the first comparison means to validate or invalidate the extrapolation elementary information element in calculated result information, from a comparison of the potential result information with the identified typical results.

4. Security system of any of the previous claims, **characterised in that** the chronometric means (7) are associated to selection means (28) for the elementary information elements taken into account by the first calculation means (15), according to a time scale with an irregular variation pitch favouring the consideration of the elementary information closest to the instant at which the signal is emitted by the corresponding cell.

5. Security system of any of the previous claims, **characterised in that** the chronometric means (7) are further associated to means for processing (25) the signals received by the cells (24), to amplify these signals (24) proportionally to the duration separating the emission from the reception by the cell of a corresponding signal.

6. Security system of any of the previous claims, **characterised in that** the cells (5) are positioned aligned on a transversal beam forming the support for an application of the system for crossing a door threshold (3).

7. Security system of any of the previous claims, **characterised in that** it associates to the first calculation means a floor mat equipped with detection sensors, to generate a control information element in the case of at least one person walking on the floor mat.

8. Security system of claim 7, **characterised in that** the second calculation means further comprise means for processing the control information, so as, if applicable, to generate an alert information element from a coherency analysis between a detected and compared result information element and the control information.

9. Security system of any claims 7 and 8, **characterised in that** the floor mat is made of a stratified assembly, comprising a rigid surface plate, a conductive layer composed of conductive strips positioned transversally under the plate, where they are distant in the direction of the passage of the place to be secured, an insulating layer which covers the lower face of the conductive layers to protect them, and an adhesive strip to fix the mat to the floor.

10. Security system of claim 9, **characterised in that** the conductive strips have a width of around 20 mm and are composed of three parallel conductive strips spaced at a distance from one another of between 1 mm and 2 mm, where the width of the median strip is around 10 mm.

## Patentansprüche

1. Sicherheitssystem für die Kontrolle der Einhaltung eines bestimmten Verfahrens zur Überschreitung eines Durchgangsortes (1) mit selektivem Zugang von einer befugten Person, wie die Einzigkeit von dieser Person, um gegebenenfalls eine Warninformation zu erzeugen, wobei dieses Sicherheitssystem folgendes umfasst:
- zumindest eine Gruppe (4) von mehreren Zellen (5), die am Durchgangsort (1) angeordnet sind und die Signale per Sendesequenz (12) für einen gegebenen Zyklus (13) senden und empfangen, deren Ausführung von Mitteln zum Steuern (6) dieser Sendungen und Empfänge von Signalen sukzessiv von der einen zur anderen der Zellen (5) der Gruppe (4) für jede der Sequenzen (12) abhängt,
- chronometrische Mittel (7) zum Messen der Dauer zwischen der Sendung eines Signals durch eine Zelle (5) und dem Empfang durch diese Zelle (5) von einem vorher gesendeten Signal,
- erste Mittel zum Speichern (11) der Signale (24), die einzeln durch die Zellen (5) empfangen werden, und die für jede der Zellen (5) und für jede Sendesequenz (12) verteilt werden in elementare Informationen in Bezug auf herausgestellte und alternativ nicht existierende Erkennungen eines Hindernisses, wobei jeder der Erkennungen eine Dauer zugeordnet ist, die nach einem vorbestimmten Zeitmaßstab gemessen ist,
- erste Berechnungsmittel (15), um für jeden Zyklus (13) die elementaren Informationen in Ergebnisinformationen zusammenzufassen, die jeder der Zellen (5) per Sendesequenz (12) zugeordnet sind,
- zweite Berechnungsmittel (18), um anhand der Ergebnisinformationen eine Warninformation in Bezug auf die Nichteinhaltung eines vorher identifizierten Verfahrens zur Überschreitung des Durchgangsortes (1) zu bestimmen,
**dadurch gekennzeichnet, dass** die zweiten Berechnungsmittel (18) zweiten Mitteln zum Speichern (19) von mehreren Typ-Ergebnisinformationen (20) zugeordnet sind, die vorher gespeichert und die identifiziert sind, einer bekannten Situation zu entsprechen, der gegebenenfalls eine Warninformation zugeordnet ist, zum Bilden erster Mittel zum Vergleichen (18,19) der zumindest annähernden Ähnlichkeit zwischen den Ergebnisinformationen, die für jeden Zyklus und die Typ-Ergebnisinformationen (20) berechnet sind, und gegebenenfalls der Erzeugung eines Warnsignals, und **dadurch** dass die zweiten Berechnungsmittel (18) iterative Berechnungsmittel (23) umfassen, um mehrere potentiell zugelassene Ergebnisinformationen (27) anhand von Ergebnisinformationen (16) zu definieren, die vorher berechnet werden und zuerst für einen gegebenen Zyklus (13) verglichen werden, wobei diese iterativen Berechnungsmittel (23) zweiten Mitteln zum Vergleichen (26) der zumindest annähernden Ähnlichkeit zwischen diesen mehreren potentiell zugelassenen Ergebnisinformationen (27) und Ergebnisinformationen (16) die später berechnet werden und zuerst für einen nächsten gegebenen Zyklus (13) verglichen werden, zugeordnet sind, um gegebenenfalls ein Warnsignal zu erzeugen.

2. Sicherheitssystem nach einem der vorhergehenden Ansprüche, **dadurch gekennzeichnet, dass** die ersten Berechnungsmittel (15) Mittel sind, um elementaren Informationen in eine Ergebnisinformation zusammenzufassen, und dies, für eine selbe Zelle (5) und eine selbe Dauer für eine Sendesequenz (12) von einem Zyklus (13), anhand einer Erhöhung der Ergebnisinformation in Abhängigkeit von der Rekursion der Hinderniserkennung von der einen zur anderen der entsprechenden elementaren Informationen, so dass die Ergebnisinformationen auf einer Werteskala in Bezug auf die Anzahl der Sendesequenzen (12) des Zyklus (13) bewertet werden, in Abhängigkeit von der Rekursion der Erkennung oder nicht von einem selben Hindernis von jeder der Zellen (5).

3. Sicherheitssystem nach einem der vorhergehenden Ansprüche, **dadurch gekennzeichnet, dass** die zweiten Berechnungsmittel des Weiteren Mittel zur Erkennung einer isolierten Ergebnisinformation umfassen und Mittel der Extrapolation, die zumindest eine elementare Information der Extrapolation erzeugen, die zwei isolierte Ergebnisinformationen miteinander verbinden kann, um in diesem Fall eine potentielle Ergebnisinformation zu erzeugen, wobei diese Mittel der Extrapolation in Verbindung mit den ersten Mitteln zum Vergleichen sind, um die elementare Information der Extrapolation als berechnete Ergebnisinformation zu bestätigen oder nicht, und dies anhand eines Vergleiches der potentiellen Ergebnisinformation mit den verzeichneten Typ-Ergebnissen.

4. Sicherheitssystem nach einem der vorhergehenden Ansprüche, **dadurch gekennzeichnet, dass** die chronometrischen Mittel (7) Mittel zum Auswählen (28) der elementaren Informationen sind, die von den ersten Berechnungsmitteln (15) berechnet werden, nach einem Zeitmaßstab mit nicht regelmäßiger Steigungsvariation, der die Berücksichtigung der elementaren Informationen fördert, die dem Moment der Sendung des Signals durch die entsprechende Zelle am nächsten kommen.

5. Sicherheitssystem nach einem der vorhergehenden Ansprüche, **dadurch gekennzeichnet, dass** die chronometrischen Mittel (7) des Weiteren Mitteln zum Bearbeiten (25) der von den Zellen (24) empfangenen Signale zugeordnet sind, um diese Signale (24) proportional zur Dauer zu verstärken, die die Sendung von dem Empfang durch die Zelle von einem entsprechenden Signal trennt.

6. Sicherheitssystem nach einem der vorhergehenden Ansprüche, **dadurch gekennzeichnet, dass** die Zellen (5) in einer Linie auf einem Querträger angeordnet sind, der einen Träger für eine Anwendung des Systems zur Überschreitung einer Türschwelle (3) bildet.

7. Sicherheitssystem nach einem der vorhergehenden Ansprüche, **dadurch gekennzeichnet, dass** er den ersten Berechnungsmitteln einen Bodenteppich zuordnet, der mit Erkennungssensoren ausgestattet ist, um im Fall des Durchgangs einer Person zumindest auf dem Bodenteppich eine Kontrollinformation zu erzeugen

8. Sicherheitssystem nach Anspruch 7, **dadurch gekennzeichnet, dass** die zweiten Berechnungsmittel des Weiteren Mittel zum Bearbeiten der Kontrollinformation umfassen, um gegebenenfalls eine Warninformation anhand einer Analyse der Kohärenz zwischen einer erkannten und verglichenen Ergebnisinformation und der Kontrollinformation zu erzeugen.

9. Sicherheitssystem nach einem der Ansprüche 7 und 8, **dadurch gekennzeichnet, dass** sich der Bodenteppich aus einer geschichteten Einheit zusammensetzt, die eine starre Oberflächenplatte, eine leitende Schicht, die sich aus leitenden Streifen zusammensetzt, die quer unter der Platte angeordnet sind und die nach der Durchgangsrichtung des zu sichernden Ortes beabstandet sind, eine isolierende Schicht, die an ihrer unteren Fläche die leitenden Schichten überdeckt, um diese zu schützen, und einen Klebestreifen zur Befestigung des Teppichs auf dem Boden, umfasst.

10. Sicherheitssystem nach Anspruch 9, **dadurch gekennzeichnet, dass** die leitenden Streifen eine Breite von ca. 20 mm aufweisen und sich aus drei parallelen leitenden Spuren zusammensetzen, die mit einem Abstand von 1 mm bis 2 mm voneinander beabstandet sind, wobei sich die Breite der mittleren Spur auf ca. 10 mm beläuft.
